# EUROPEAN PATENT SPECIFICATION

(11) **EP 3 031 173 B1**
(45) Date of publication and mention of the grant of the patent: **10.01.2018**
(21) Application number: 14834049.0
(22) Date of filing: 31.07.2014
(51) Int. Cl.: H04L 12/24, H04L 12/26, H04L 29/06, H04L 12/721

(54) **PROVISIONING TIME-VARYING TRAFFIC IN SOFTWARE-DEFINED FLEXIBLE GRID TRANSPORT NETWORKS**
BEREITSTELLUNG VON ZEITVARIABLEM VERKEHR IN SOFTWAREDEFINIERTEN TRANSPORTNETZWERKEN MIT FLEXIBLEN GITTERN
MISE EN SERVICE D'UN TRAFIC VARIABLE DANS LE TEMPS DANS DES RÉSEAUX DE TRANSPORT À MAILLAGE SOUPLE DÉFINIS PAR LOGICIEL

(30) Priority: 07.08.2013 US 201361863187 P; 30.07.2014 US 201414447064
(43) Date of publication of application: 15.06.2016
(73) Proprietor: NEC Corporation, Tokyo 108-8001 (JP)
(72) Inventor: PATEL, Ankitkumar, Monmouth Junction, New Jersey 08852 (US); JI, Philip Nan, Plainsboro, New Jersey 08536 (US)
(74) Representative: Betten & Resch
(86) International application number: PCT/US2014/049016
(87) International publication number: WO 2015/020863

(56) References cited:
- US-A1- 2003 126 246
- US-A1- 2006 245 356
- US-A1- 2007 076 615
- US-A1- 2008 049 640
- US-B2- 8 015 271
- HILMI E EGILMEZ ET AL: "An Optimization Framework for QoS-Enabled Adaptive Video Streaming Over OpenFlow Networks", IEEE TRANSACTIONS ON MULTIMEDIA, IEEE SERVICE CENTER, PISCATAWAY, NJ, US, vol. 15, no. 3, 1 April 2013 (2013-04-01), pages 710-715, XP011496878, ISSN: 1520-9210, DOI: 10.1109/TMM.2012.2232645
- KONSTANTINOS CHRISTODOULOPOULOS ET AL: "Time-Varying Spectrum Allocation Policies and Blocking Analysis in Flexible Optical Networks", IEEE JOURNAL ON SELECTED AREAS IN COMMUNICATIONS, IEEE SERVICE CENTER, PISCATAWAY, US, vol. 31, no. 1, 1 January 2013 (2013-01-01), pages 13-25, XP011481797, ISSN: 0733-8716, DOI: 10.1109/JSAC.2013.130103
- CHRISTODOULOPOULOS K ET AL: "Routing and Spectrum Allocation policies for time-varying traffic in flexible optical networks", OPTICAL NETWORK DESIGN AND MODELING (ONDM), 2012 16TH INTERNATIONAL CONFERENCE ON, IEEE, 17 April 2012 (2012-04-17), pages 1-6, XP032448935, DOI: 10.1109/ONDM.2012.6210273 ISBN: 978-1-4673-1440-4

## Description

### RELATED APPLICATION INFORMATION

This application claims priority to provisional application serial number 61/863,187 filed on August 7, 2013.

### BACKGROUND

### Technical Field

The present invention relates to signal processing, and more particularly to provisioning time-varying traffic in software-defined flexible grid transport networks.

### Description of the Related Art

While designing a flexible grid network for a time-varying traffic demands, an open challenge is how to provision these demands using adaptive optical channels, such that the maximum required spectrum to support the given demands is minimized for the given blocking probability of incremental traffic. The problem is referred to as the time-varying traffic provisioning problem.

The publication "An Optimization Framework for QoS-Enabled Adaptive Video Streaming Over OpenFlow Networks" by Hilmi E Egilmez, Seyhan Civanlar and Murat Tekalp from 2013-04-01 discloses an analytical framework for optimization of forwarding decisions at the control layer to enable dynamic Quality of Service (QoS) over OpenFlow networks and discusses application of this framework to QoS-enabled streaming of scalable encoded videos with two QoS levels.

### SUMMARY

These and other drawbacks and disadvantages of the prior art are addressed by the present principles, which are directed to provisioning time-varying traffic in software-defined flexible grid transport networks.

According to an aspect of the present principles, a method is provided for provisioning time-varying traffic demands in an optical transport software-defined network. The method includes pre-provisioning an amount of bandwidth for best effort traffic. The method further includes iteratively applying, using a processor, an iterative simulated annealing-based traffic provisioning procedure to determine candidate bandwidths for the best effort traffic in a set of iterations. The method also includes selecting a particular one of the candidate bandwidths for the best effort traffic that has a corresponding blocking value lower than a given blocking requirement β and that requires a minimum amount of spectrum as compared to other ones of the candidate bandwidths for the best effort traffic. The iteratively applying step includes varying the amount of bandwidth for best effort traffic in each of the iterations to determine the candidate bandwidths for the best effort traffic. The iteratively applying step further includes varying an amount of shared bandwidth between neighboring channels, out of the amount of bandwidth for best effort traffic, in each of the iterations, to further determine the candidate bandwidths for the best effort traffic.

According to another aspect of the present principles, there is provided a computer program product comprising a computer readable storage medium having computer readable program code embodied therein for performing a method for provisioning time-varying traffic demands in an optical transport software-defined network. The method includes pre-provisioning an amount of bandwidth for best effort traffic. The method further includes iteratively applying, using a processor, an iterative simulated annealing-based traffic provisioning procedure to determine candidate bandwidths for the best effort traffic in a set of iterations. The method also includes selecting a particular one of the candidate bandwidths for the best effort traffic that has a corresponding blocking value lower than a given blocking requirement β and that requires a minimum amount of spectrum as compared to other ones of the candidate bandwidths for the best effort traffic. The iteratively applying step includes varying the amount of bandwidth for best effort traffic in each of the iterations to determine the candidate bandwidths for the best effort traffic. The iteratively applying step further includes varying an amount of shared bandwidth between neighboring channels, out of the amount of bandwidth for best effort traffic, in each of the iterations, to further determine the candidate bandwidths for the best effort traffic.

These and other features and advantages will become apparent from the following detailed description of illustrative embodiments thereof, which is to be read in connection with the accompanying drawings.

### BRIEF DESCRIPTION OF DRAWINGS

The disclosure will provide details in the following description of preferred embodiments with reference to the following figures wherein:
FIG. 1 shows an exemplary optical transport software defined network (SDN) architecture 100 to which the present principles can be applied, in accordance with an embodiment of the present principles;
FIG. 2 shows an exemplary Iterative Simulated Annealing-based method 200, in accordance with an embodiment of the present principle;
FIG. 3 shows an exemplary Iterative Simulated Annealing-based traffic provisioning method 300, in accordance with an embodiment of the present principles; and
FIGs. 4-5 show an exemplary routing, wavelength assignment, and spectrum allocation (RWSA) method 400, in accordance with an embodiment of the present principles.

### DETAILED DESCRIPTION OF PREFERRED EMBODIMENTS

The present principles are directed to provisioning time-varying traffic in software-defined flexible grid transport networks. It is to be appreciated that the terms "traffic demand" and "request" are used interchangeably herein. Similarly, the terms "reserve" and "provision" are used also interchangeably.

In an embodiment, we provide an Iterative Simulated Annealing-based (ISA) procedure that provisions time-varying traffic demands in the minimum amount of spectrum by sharing the maximum amount of spectrum among neighboring channels for a given blocking probability. In the first phase, the spectrum is provisioned for *x* Gb/s of guaranteed traffic and *y* Gb/s of projected best effort bandwidth for the given traffic demands using the ISA procedure. As used herein, the terms "best effort bandwidth" refers to the bandwidth provisioned for best effort traffic. As used herein, the terms "best effort traffic" refers to traffic with a lower priority that may be dropped if sufficient bandwidth resources are not available. Best effort traffic has loose service level agreement (SLA) requirements. Best effort traffic is also referred to as default traffic. As used herein, the terms "guaranteed traffic" refers to traffic with a high priority that must be provisioned in a network and is bounded to strict SLA requirements. During a lack of bandwidth resources, guaranteed traffic must be provisioned with a higher priority. Guaranteed traffic is also referred to as priority traffic. The ISA procedure routes and assigns spectrum such that the *p* G/bs of pre-provisioned spectrum for the projected best effort traffic can be shared between neighboring channels. In the next phase, expansion and contraction of the time-varying best effort traffic are dynamically executed for a sufficient time until the network reaches a steady-state to determine blocking of the best effort traffic. The procedure increases the amount of provisioned bandwidth and shared bandwidth for the best effort traffic, and repeats the procedure until the potential pre-provisioned and shared bandwidths for the best effort traffic are considered. Finally, among the found solutions for the potential bandwidths of the best effort traffic, the procedure selects a solution that meets the blocking requirement of the network with the minimum amount of spectrum.

A brief description will now be given of some of the many attendant advantages of the ISA procedure. Advantageously, the ISA procedure provides an effective tool for planning and designing networks that supports time-varying traffic demands. Moreover, the ISA procedure effectively provisions the given time-varying traffic demands within the minimum amount of spectrum for the given blocking probability of the best effort traffic. Further, the ISA procedure is the first procedure that addresses the time-varying traffic provisioning problem with the goal of minimizing spectrum for the given blocking probability of traffic.

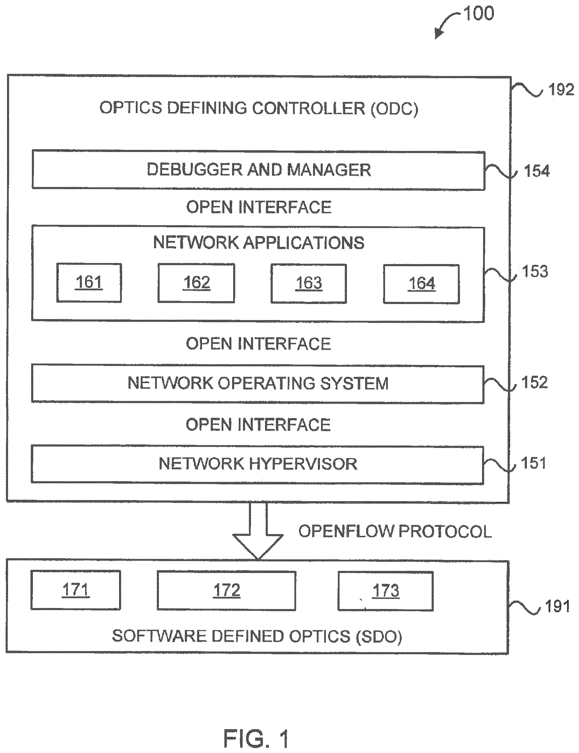

FIG. 1 shows an exemplary optical transport software defined network (SDN) architecture 100 to which the present principles can be applied, in accordance with an embodiment of the present principles. In the optical transport SDN architecture 100, the control plane is abstracted from the physical hardware of the network elements and most network control and management intelligence now resides in a centralized controller, namely an optics defining controller (ODC) 192. The ODC 192 controls network elements using a standardized protocol, such as OpenFlow protocol over standardized interfaces at controller and network elements. The control plane decisions present themselves in the form of rules, actions, and policies, and network elements apply these decisions based on match-action on connections. Thus, optical transport SDN 100 partitions a network into software defined optics (SDO) 191 and the optics defined controller (ODC) 192.

The ODC 192 manages the network, and performs network optimization and customization to utilize flexibility of the SDO 191. The ODC functionalities are further extracted into a network hypervisor 151, a network operating system 152, network applications and database collectively represented by the figure reference numeral 153, and debugger and management planes 154. These planes 154 are isolated by open standardized interfaces to allow simultaneous and rapid innovations at each layer independently. Various control plane functionalities including, for example, but not limited to, routing 161, scheduling 162, access control 163, Quality of Service (QoS) management 164, cloud resource mapping, resource allocation, protection and restoration, defragmentation, energy optimization, and so forth (the latter not shown), are installed as applications and data base in the ODC 192. Network hypervisor 151 offers virtualization by providing isolation and sharing functions to a data plane as well as an abstract view of network and computing resources while hiding physical layer implementation details to a controller in order to optimize and simplify the network operations. Network operating system 152 offers a programmable platform for the execution of applications and hypervisors. Debugger and management planes 154 offer access control 163 and QoS management 164 as network applications, while monitoring network performance, and performing fault isolation, localization, and recovery.

The software defined optics (SDO) 191 include a programmable transponder 171, colorless-directionless-contentionless-gridless (CDCG) ROADMs 172, and an amplifier 173.

In accordance with one or more embodiments of the present principles, we provide an Iterative Simulated Annealing (ISA) procedure in which bandwidth for best effort traffic, denoted as *y* Gb/s , is pre-provisioned along with the bandwidth for guaranteed traffic in advance, and among this pre-provision bandwidth, *y* Gb/s , the procedure allows to share up to *p* Gb/s of bandwidth between neighboring channels. Thus, dynamic best effort traffic can vary from 0 up to *y* Gb/s on-the-fly. Since this *y* Gb/s bandwidth may not always be occupied by the best effort traffic, the spectrum provisioned for *y* Gb/s bandwidth can be shared among neighboring channels. The procedure allows (*p*/*y*) fraction of this spectrum to be shared among neighboring channels. In the subsequent phase, the procedure provisions the given set of traffic demands using the Simulated Annealing-based traffic provisioning procedure with the goal of maximizing sharing of spectrum between neighboring channels. Once the traffic is provisioned, the procedure dynamically expands and contracts the channels upon arrivals and departures of best effort traffic demands based on the given distributions. Upon arrivals of dynamic best effort traffic, the procedure starts occupying either provisioned or shared channel spectrum towards the lower frequencies first starting from the center channel frequency. If the spectrum at lower frequencies is already occupied, then the procedure starts occupying either provisioned or shared channel spectrum towards the higher frequency starting from the center channel frequency. If the spectrum of a channel at both lower and higher frequencies is already occupied, then the traffic is blocked. The procedure evaluates the network performance in such dynamic traffic scenario until the network reach in the steady state, and finally determines the blocking of best effort traffic. The ISA procedure iteratively repeats the same procedure after increasing the shared bandwidth *p* of best effort traffic by *v* Gb/s, where *v* Gb/s is the granularity at which transponder can expand and contract the channel bandwidth. Each iteration results in one potential solution.

If the shared bandwidth *p* exceeds the pre-provisioned bandwidth *y*, then the ISA procedure increases the amount of pre-provisioned bandwidth *y* by *v* Gb/s. The procedure is repeated until pre-provisioned bandwidth becomes equivalent to the transponder capacity *L* Gb/s. Finally, among the found potential solutions, the procedure selects a solution that results in a blocking lower than the given blocking limit β, and requires the minimum amount of spectrum.

The ISA procedure is a probabilistic iterative method designed based on the physical process of annealing a solid. Here, we modified this process to provision time-varying traffic in networks as follows. The configuration of the procedure is defined as an order of demands in which the time-varying connections are routed, wavelengths are assigned, and spectrum is allocated. An energy function to be minimized represents the maximum required spectrum over a fiber link. A temperature is defined as a global time-varying parameter *T*, and the annealing schedule controls how this temperature varies over time.

Initially, the ISA procedure determines the cost of each demand, which is defined as the product of the requested guaranteed bandwidth and the number of hops along the shortest route between source and destination nodes, *h_{sd}.* In the next step, the procedure sorts the given traffic demands in descending order of their cost, and this sorted order of demands is considered a new configuration *N*. A random order of demands is considered as a current configuration *C*. The energy function of the current configuration, *E*(*C*), and the new configuration, *E*(*N*), are initialized to infinite. The procedure also initializes temperature *T* and an annealing parameter *α.* After initialization, the process applies the routing, wavelength assignment, and spectrum allocation procedure for time-varying traffic demands in the order of traffic demands defined in the new configuration *N*. The maximum required spectrum over the fiber represents the energy of the configuration *N*,E(*N*)*.* If the energy of the new configuration *E*(*N*) is reduced compared to the energy of the current configuration *E*(*C*), then the procedure replaces the current *C* configuration by the new configuration *N*. On the other hand, if the energy is not improved, then the procedure replaces the current configuration with the new configuration with probability e^{-(*E*(*N*)-*E*(*C*)/*T*)}*.* In the next step, the procedure updates the temperature *T* by the annealing schedule that is *a***T.* Finally, the procedure checks the termination conditions, that is whether the temperature is reduced beyond the threshold or the maximum number of iterations has been reached. If either one of these conditions is met, then the procedure is terminated. Otherwise, the procedure generates a new configuration *N* from the current configuration C by swapping the order of two neighboring demands that are randomly selected, and repeats the same procedure.

The procedure considers discretized spectrum for the routing, wavelength assignment, and spectrum allocation (RWSA) procedure. Each slot in the spectrum is referred to as a wavelength slot. Each wavelength slot is of g GHz. The spectrum is defined in terms of the number of consecutive wavelength slots. The center wavelength slot is referred to as the wavelength of a channel. The state of a wavelength slot can be occupied, available, shared, or provisioned. An occupied state represents that the wavelength slot is currently used to carry traffic. An available state represents that the wavelength slot is not assigned to any channel. A shared state represents that the wavelength slot is pre-provisioned and is shared by multiple channels. A provisioned state represents that the wavelength slot is reserved for a channel, but is not used to carry any traffic. The state of wavelength slots along a fiber/route is referred to as the spectrum profile of the fiber/route. A set of consecutive wavelength slots with states either available or shared is referred to as a spectral island. A set of wavelength slots reserved for guaranteed traffic is referred to as guaranteed spectrum. A set of wavelength slots reserved for best effort traffic and which is not shared is referred to as provisioned spectrum. A set of wavelength slots shared among neighboring channels is referred to as the shared spectrum. How the provisioned spectrum is reserved around the guaranteed spectrum and how the shared spectrum reserved around the provisioned spectrum is described herein. The Ceil(.) described with respect thereto denotes a ceiling operation in mathematics.

For routing, wavelength assignment, and spectrum allocation of time-varying traffic demands, the procedure pre-calculates the *K-* shortestroutes between each pair of nodes. For a traffic demand, the procedure first selects one of the *K -* shortestroutes, which is not yet considered. The procedure finds the spectrum profile along the selected routes as follows. If wavelength slot *w* is occupied on at least one of the links along the route, then the state of the wavelength slot *w* of the spectrum profile is occupied. If the wavelength slot *w* is not occupied on all the links along the route, and the state of wavelength slot *w* is provisioned on at least one of the links along the route, then the state of wavelength slot *w* of the spectrum profile is provisioned. If wavelength slot *w* is neither occupied nor provisioned on all the links along the route, and the state of wavelength slot *w* is shared on at least one of the links along the route, then the state of wavelength slot *w* of the spectrum profile is shared. If the wavelength slot *w* is available on all the links along the route, then the state of wavelength slot *w* of the spectrum profile is available. After finding the spectrum profile of the selected route, the procedure finds a spectral island with the following requirements. A spectral island with at least [Ceil(*x*/*v*)*Ceil(*z*/*g*)] number consecutive wavelength slots with state available (called guaranteed spectrum), and [Ceil((*y*-*p*)/*v*)*Ceil(*z*/*g*)] number of wavelength slots with state available around the guaranteed spectrum (called provisioned spectrum), and [Ceil(*p*/*v*)*Ceil(*z*/*g*)] number of wavelength slots around provisioned spectrum with state either available or shared (called shared spectrum) at the edges of the spectral island are searched in the spectrum profile of the route. The procedure records the wavelength at which the spectrum island is available. The above mentioned procedure is repeated for all *K -* shortestroutes. Finally the procedure selects a route on which the spectrum island is available at the lowest wavelength, and updates the relevant states of wavelength slots on all links along the route as follows. On the selected route and in the spectrum island at the selected wavelength, the procedure reserves [Ceil(*x*/*v*)*Ceil(*z*/*g*)] number consecutive available wavelength slots for guaranteed traffic by updating the state of the wavelength slots to be occupied, [Ceil((*y*-*p*)*lv*)*Ceil(*z*/*g*)] number of available wavelength slots for best effort traffic around the guaranteed spectrum by updating the state of the wavelength slots to be provisioned, and [Ceil(*p*/*v*)*Ceil(*z*/*g*)] number of shared or available wavelength slots around the provisioned spectrum for best effort traffic by updating the state of the wavelength slots to be shared.

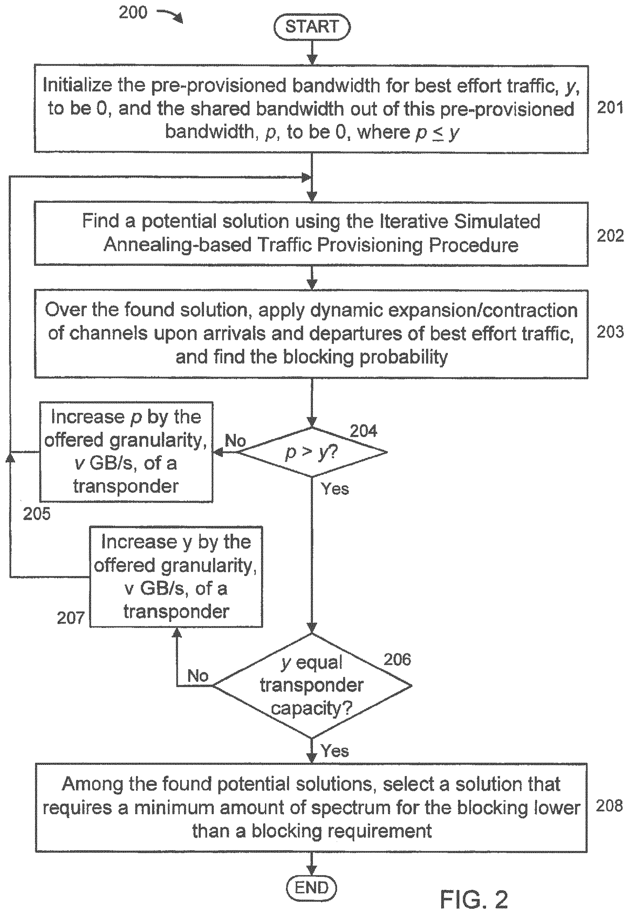

FIG. 2 shows an exemplary Iterative Simulated Annealing-based method 200, in accordance with an embodiment of the present principles.

At step 201, initialize the pre-provisioned bandwidth for best effort traffic, *y*, to be 0, and the shared bandwidth out of this pre-provisioned bandwidth, *p,* to be 0, where *p≤y.*

At step 202, find a potential solution using the Simulated Annealing-based Traffic Provisioning procedure.

At step 203, over the found solution, apply dynamic expansion/contraction of channels upon arrivals and departures of best effort traffic, and find the blocking probability. Upon arrivals of dynamic best effort traffic, the procedure starts occupying either provisioned or shared channel spectrum towards the lower indexed wavelength slots first starting from the center channel frequency. If the lower indexed wavelength slots of a channel are already occupied, then the procedure starts occupying either provisioned or shared channel spectrum towards the higher indexed wavelength slots starting from the center channel frequency.

At step 204, check whether the shared bandwidth exceeds the pre-provision bandwidth for best effort traffic. If not, then the method proceeds to step 205. Otherwise, the method proceeds to step 206.

At step 205, increase *p* by the offered granularity, *v* Gb/s, of a transponder.

At step 206, check whether *y* Gb/s is equal to the capacity of transponder *L* GB/s. If not, then the method proceeds to step 207. Otherwise, the method proceeds to step 208.

At step 207, increase *y* by the offered granularity, *v* Gb/s, of a transponder.

At step 208, among the found potential solutions, select a solution that requires minimum amount of spectrum for the blocking lower than β.

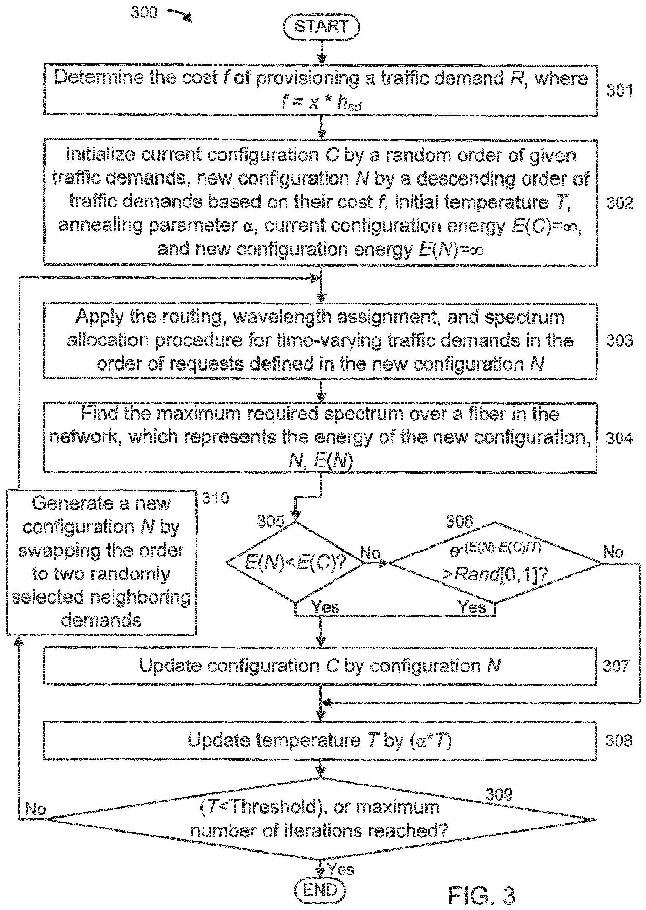

FIG. 3 shows an exemplary Iterative Simulated Annealing-based traffic provisioning method 300, in accordance with an embodiment of the present principles.

At step 301, determine the cost *f* of provisioning a traffic demand *R*, where *f*=*x*h_{sd}.*

At step 302, initialize a current configuration *C* by a random order of given traffic demands, new configuration *N* by a descending order of traffic demands based on their cost *f*, initial temperature *T*, annealing parameter α, current configuration energy *E*(*C*)= ∞, and new configuration energy *E*(*N*)= ∞.

At step 303, apply the routing, wavelength assignment, and spectrum allocation (RWSA) procedure for time-varying traffic demands in the order of requests defined in the new configuration *N*.

At step 304, find the maximum required spectrum over a fiber in the network, which represents the energy of new configuration *N, E*(*N*)*.*

At step 305, check whether the energy of the new configuration is smaller than the energy of the current configuration. If the energy of the new configuration is smaller, than the method proceeds to step 307. Otherwise, the method proceeds to step 306.

At step 306, check whether the probability *e*^{*-*(*E*(*N*)*-E*(*C*)/*T*)} is greater than a uniform random number between 0 and 1. If not, then the method proceeds to step 308. Otherwise, the method proceeds to step 307.

At step 307, update configuration *C* by configuration *N*.

At step 308, update temperature *T* by (*a*T*)*.*

At step 309, check whether the temperature *T* is smaller than the given threshold or the maximum number of iterations is reached. If any one of these conditions is met, then the method is terminated. Otherwise, the method proceeds to step 310.

At step 310, generate a new configuration *N* by swapping the order of two neighboring demands that are randomly selected.

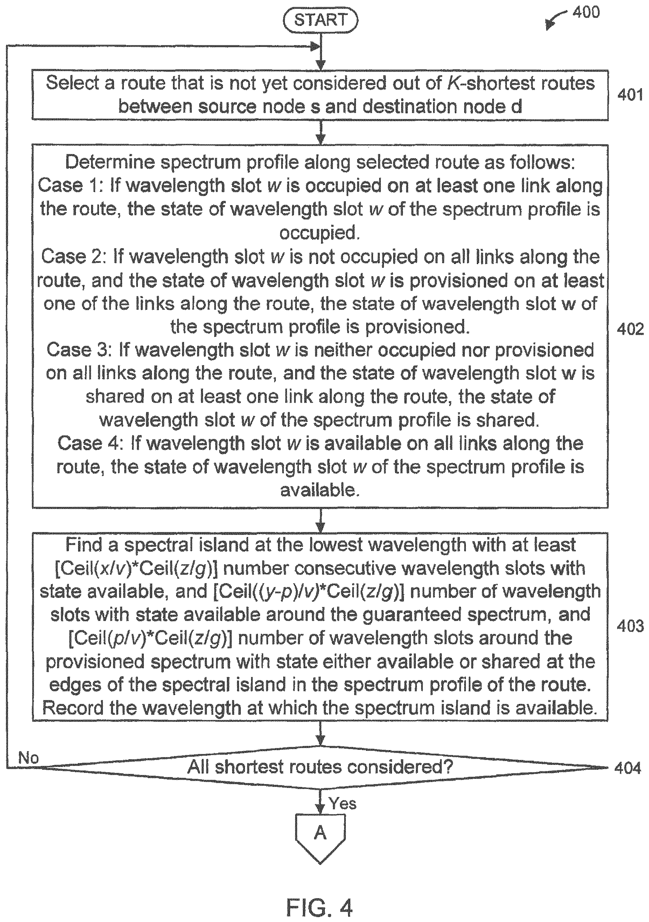

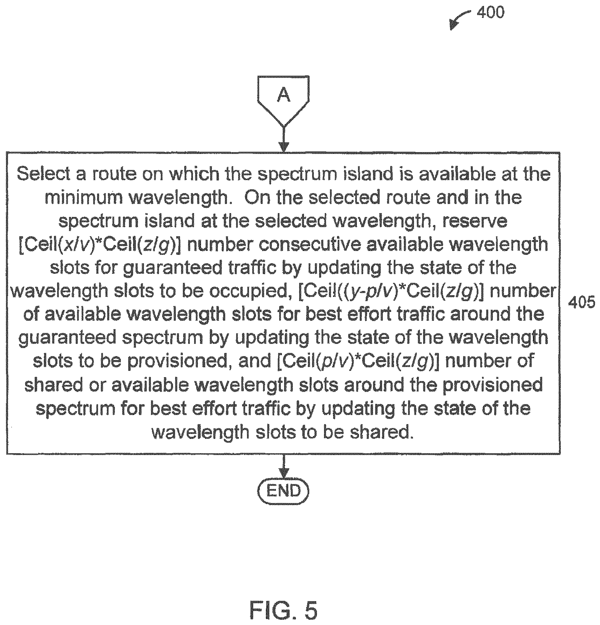

FIGs. 4-5 show an exemplary routing, wavelength assignment, and spectrum allocation (RWSA) method 400, in accordance with an embodiment of the present principles.

At step 401, select a route that is not yet considered out of the *K -* shortest routes between source node *s* and destination node *d*.

At step 402, determine the spectrum profile along the selected route as follows.

Case 1: If wavelength slot *w* is occupied on at least one of the link along the route, the state of wavelength slot *w* of the spectrum profile is occupied.

Case 2: If wavelength slot *w* is not occupied on all the links along the route, and the state of wavelength slot *w* is provisioned on at least one of the links along the route, the state of wavelength slot *w* of the spectrum profile is provisioned.

Case 3: If wavelength slot *w* is neither occupied nor provisioned on all the links along the route, and the state of wavelength slot *w* is shared on at least one of the links along the route, the state of wavelength slot *w* of the spectrum profile is shared.

Case 4: If wavelength slot *w* is available on all the links along the route, the state of wavelength slot w of the spectrum profile is available.

At step 403, find a spectral island at the lowest wavelength with at least [Ceil(*x*/*v*)*Ceil(*z*/*g*)] number consecutive wavelength slots with state available (called guaranteed spectrum), and [Ceil((*y*-*p*)/*v*)***Ceil(*z*/*g*)] number of wavelength slots with state available around the guaranteed spectrum (called provisioned spectrum), and [Ceil(*p*/*v*)*Ceil(*z*/*g*)] number of wavelength slots around the provisioned spectrum with state either available or shared (called shared spectrum) at the edges of the spectral island in the spectrum profile of the route. The method records the wavelength at which the spectrum island is available.

At step 404, check whether all routes are considered. If all *K* - shortestroutes are taken into consideration, then the method proceeds to step 405. Otherwise, the method returns to step 401.

At step 405, select a route on which the spectrum island is available at the minimum wavelength. On the selected route and in the spectrum island at the selected wavelength, the procedure reserves [Ceil(*x*/*v*)*Ceil(*z*/*g*)] number consecutive available wavelength slots for guaranteed traffic by updating the state of the wavelength slots to be occupied, [Ceil((*y*-*p*)/*v*)***Ceil(*z*/*g*)] number of available wavelength slots for best effort traffic around the guaranteed spectrum by updating the state of the wavelength slots to be provisioned, and [Ceil(*p*/*v*)*Ceil(*z*/*g*)] number of shared or available wavelength slots around the provisioned spectrum for best effort traffic by updating the state of the wavelength slots to be shared.

Embodiments described herein may be entirely hardware, entirely software or including both hardware and software elements. In a preferred embodiment, the present invention is implemented in software, which includes but is not limited to firmware, resident software, microcode, etc.

Embodiments may include a computer program product accessible from a computer-usable or computer-readable medium providing program code for use by or in connection with a computer or any instruction execution system. A computer-usable or computer readable medium may include any apparatus that stores, communicates, propagates, or transports the program for use by or in connection with the instruction execution system, apparatus, or device. The medium can be magnetic, optical, electronic, electromagnetic, infrared, or semiconductor system (or apparatus or device) or a propagation medium. The medium may include a computer-readable medium such as a semiconductor or solid state memory, magnetic tape, a removable computer diskette, a random access memory (RAM), a read-only memory (ROM), a rigid magnetic disk and an optical disk, etc.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

The foregoing is to be understood as being in every respect illustrative and exemplary, but not restrictive, and the scope of the invention disclosed herein is not to be determined from the Detailed Description, but rather from the claims as interpreted according to the full breadth permitted by the patent laws. Additional information is provided in an appendix to the application entitled, "Additional Information". It is to be understood that the embodiments shown and described herein are only illustrative of the principles of the present invention and that those skilled in the art may implement various modifications without departing from the scope of the invention. Those skilled in the art could implement various other feature combinations without departing from the scope of the invention.

### APPENDIX

### PROVISIONING TIME-VARYING TRAFFIC IN SOFTWARE-DEFINED FLEXIBLE GRID TRANSPORT NETWORKS

### A1. Describe the problem that the present invention attempts to solve.

Software-Defined Network (SDN) architecture [NMcKeown] enables network programmability to support multi-vendor, multi-technology, multi-layer communications. Recently, efforts are going on to integrate optical transport [APatel1] [PJi] within IP/Ethemet-based SDN architecture to leverage optical transmission benefits, such as low interference, long reach, and high capacity transmission with lower power consumption. Such a network is referred to as Software-Defined Optical Transport Networks. Optical transport SDN can be realized by enabling flexibility and programmability in transmission and switching network elements, such as transponders and ROADMs, management of optical channels, such as flexible-grid channel mapping, and extracting control plane intelligence from the physical hardware to the centralized controller.

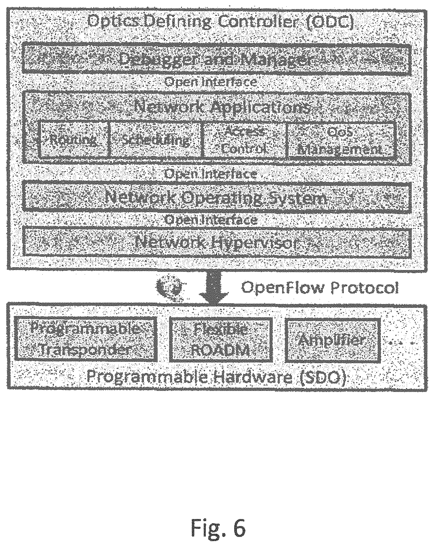

Fig. 6 shows architecture for optical transport SDN in which control plane is abstracted from physical hardware of network elements and most network control and management intelligence now resides into a centralized controller. The centralized controller controls network elements using a standardized protocol, such as OpenFlow [NMcKeown] over standardized interfaces at controller and network elements. The control plane decisions present in the form of rules, actions, and policies, and network elements applies these decision based on match-action on connections. Thus, optical transport SDN partitions a network into software defined optics (SDO) and optics defined controller (ODC).

Optics defining controller manages the network, and performs network optimization and customization to utilize flexibility of SDO. ODC functionalities are further extracted into network hypervisor, operating system, network applications and database, and debugger and management planes. These planes are isolated by open standardized interfaces to allow simultaneous and rapid innovations at each layer independently. Various control plane functionalities, for example, cloud resource mapping, routing and resource allocation, protection and restoration, defragmentation, energy optimization, etc., are installed as applications and data base in the ODC. Network hypervisor offers virtualization by providing isolation and sharing functions to a data plane as well as an abstract view of network and computing resources while hiding physical layer implementation details to a controller in order to optimize and simplify the network operations. Operating system offers a programmable platform for the execution of applications and hypervisors. Debugger and management plane offers access control and QoS management, while monitoring network performance, and performs fault isolation, localization, and recovery.

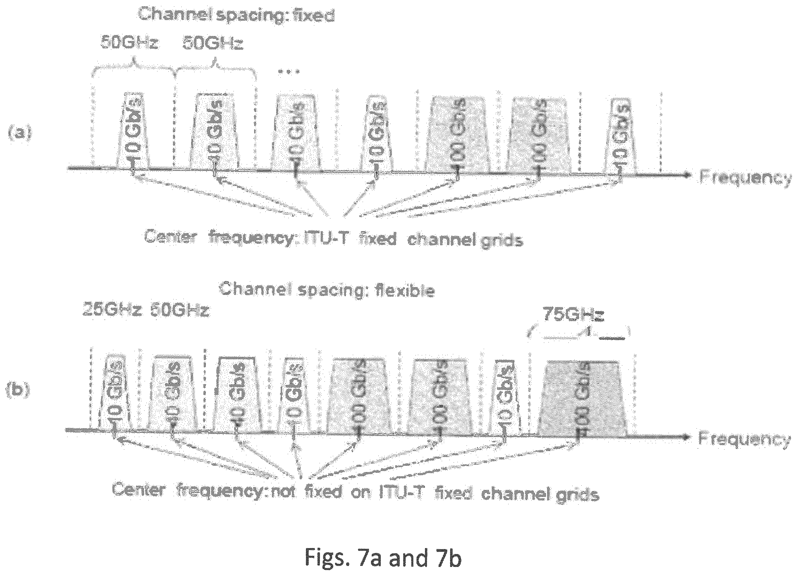

The key elements of software-defined optics are; (1) flexible-grid channel mapping, (2) programmable transponders, and (3) colorless-directionless-contentionless-gridless (CDCG) ROADMs.
(1) The channel spacing in the current optical WDM networks is fixed and the same for all channels, standardized by the ITU-T [ITU-T], irrespective of the line rate of channels (Fig. 7(a)). We refer such networks as the fixed grid networks. Fixed spectrum assigned to channels in the fixed grid networks may not be sufficient if the channels require larger spectral width to support higher line rates. On the other hand, if channels are operating at low line rates, then the required spectrum may be smaller than the assigned spectrum. Thus, the spectrum efficiency is not optimized in fixed grid networks. There has been growing research interests on optical WDM systems that are not limited to fixed ITU-T channel grid, but offer flexible channel grid to increase the spectral efficiency [APatel2] [MJinno]. Such networks are referred to as Flexible Grid WDM networks (Fig. 7(b)). Flexible-grid channel mapping allows an assignment of flexible amount of spectrum to channels to achieve higher spectral efficiency by applying spectrum-efficient modulation formats and eliminating guard bands. Such channels are referred to as flexible optical channels. Furthermore, it opens up new functionalities, such as an adaptation of channel bandwidth at an optical layer by expansion and contraction of allocated spectrum on-the-fly in response to the time-varying traffic demand. We refer to such channels as adaptive optical channels [APatel2].
   The transponder can be programmed for various modulation formats [YKai], [MJinno] and FEC coding [TXia]. Thus, transponders consist of flexible line interfaces those offer variable transmission capacity within optimum spectral width for heterogeneous reach requirements. However, this flexibility at line interfaces cannot be explored until the flexibility at client interfaces, such as Ethernet and SONET/OTN, is enabled. For example, currently IEEE 802.3 standard has defined and standardized Ethernet interfaces of 10 Mb/s, 100 Mb/s, 1 Gb/s, and 10 Gb/s. If the traffic is smaller than the Ethernet interface rate, then for the residual interface capacity, idle symbols are transmitted just to comply with the standard. Similarly, for SONET/OTN interfaces in which interface rates are standardized to fixed set of rates, such as 2.5 Gb/s, 10 Gb/s, 40 Gb/s, and 100 Gb/s, if the traffic rate is smaller than interface rate, idle data is stuffed to fill up the residual interface capacity. Thus, Ethernet/SONET/OTN client interfaces are fixed rate even though actual traffic is lower than the interface capacity. Furthermore, the rate at a line interface has to comply with the rate at client interface to meet the flow conservation constraint. One of the solutions to enable flexible client rate is to change the Ethernet, SONET, OTN standards to support flexible rate transmission; however, this requires complicated transmitter/receiver design with variable baud rate. Additionally, standardization is a slower process. An alternative is to design transmitter/receiver design that enables flexible client interfaces while keeping the same Ethemet/OTN/SONET standards.
(4) CDCG-ROADM can be programmed to switch connections operating on any wavelength with any spectral requirement over any outgoing direction. Furthermore, connections can be added and dropped at a node without contentions. These hardware and their features establishes foundation of SDON optimization and customization capabilities.

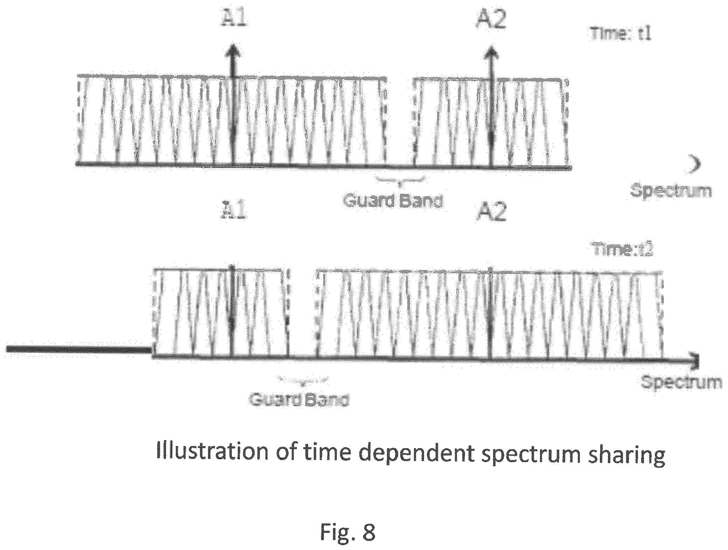

Flexible grid optical transport has recently gained a lot of interest due to its higher spectral, cost, and energy efficiencies [APatel2], and thus, it is the most suitable technology to provide interconnections between IP routers. The converged IP data flow in the core network is highly dynamic and time-varying. Designing a flexible-grid network to support such traffic using static flexible channels requires over-provisioning spectrum to support the peak traffic volume. The fluctuation in traffic may underutilize the provisioned spectrum if traffic is low, while it may cause congestion and reduce network throughput if the traffic burst exceeds beyond the channel capacity. An alternative is to support such traffic using adaptive optical channels that can expand or contract the channel spectrum as traffic varies. The spectrum between neighboring adaptive channels can be shared at a time if the cumulative required spectrum by the neighboring channels is smaller than the spectrum between their center frequencies. Fig. 8 illustrates how such adaptive channels can share spectrum over time for time-varying traffic demands. Thus, statistical multiplexing of spectrum between neighboring adaptive channels further improves spectral efficiency. The availability of flexible client and line interfaces in a programmable transponder can effectively support such adaptive channels for the time varying traffic demands.

If the frequency of traffic variation in neighboring channels is of an opposite nature, then adaptive channels can achieve higher spectral efficiency; however, if this frequency is of a similar nature, then blocking of incremental traffic happens if traffic in both channels increases.

While designing a flexible grid network for a time-varying traffic demands, an open challenge is how to provision these demands using adaptive optical channels, such that the maximum required spectrum to support the given demands is minimized for the given blocking probability of incremental traffic. The problem is referred to as time-varying traffic provisioning problem. In this invention, the terminologies traffic demand and request are used interchangeably. Similarly, the terminologies reserve and provision are used interchangeably. The problem is formally defined as follows.

We are given a physical network topology G(**V,E**), where **V** represents a set of nodes and **E** represents a set of fibers interconnecting the nodes. Each node is equipped with flexible transponders and CDCG-ROADMs. Each flexible transponder offers multicarrier modulation scheme, such as OFDM, where each subcarrier offers *v* Gb/sof bandwidth and the required spectrum for each subcarrier is z GHz. A flexible transponder can offer maximum *L* Gb/s transmission capacity. A time-varying traffic demand is defined as *R*(*s,d,x* Gb/s, *λ,µ*)*,* where *s* is a source node, *d* is a destination node, *x* Gb/s is the pre-reserved guaranteed traffic demand, and *λ* and *µ* are the arrival and departure distributions of the best effort traffic that is uniformly distributed between 1 Gb/s and (*L - x*) Gb/s respectively. For the given blocking tolerance *β* of the best effort traffic, the problem is how to provision this time-varying traffic such that maximum required spectrum to support the traffic demands is minimized. The time-varying traffic provisioning problem consists of additional sub-problems, such as how to route time-varying traffic demands, and how to assign wavelengths and allocate spectrum along this routes while sharing the maximum amount of spectrum with the neighboring channels. While provisioning time-varying traffic in the network, the spectral continuity, wavelength continuity, and spectral conflict constraints must be observed. The wavelength continuity constraint is defined as an allocation of spectrum at the same operating wavelength on all links along the route of an optical channel. The spectral continuity constraint is defined as an allocation of the same amount of spectrum on all links along the route of an optical channel. The spectral conflict constraint is defined as an allocation of non-overlapping occupied spectrum to all channels routed through the same fiber. To allow sharing of spectrum between neighboring channels, the reserved spectrum of neighboring channels can overlap; however the spectrum occupied by the traffic cannot overlap at a given time due to the spectral conflict constraint. It is assumed that a network does not support wavelength, spectrum, or modulation format conversion capability.

### A2. How have others attempted to solve the problem described in A1?

In [KChris1] and [KChris2], the authors consider a similar problem with the objective of minimizing blocking probability of sub-wavelength granularity traffic within finite spectrum. In [GShen] [MKlinkowski] and [CXie], the exact profile of time-varying traffic is given in advance. Such traffic profile is hard to predict. Furthermore, the fiber links within the same geographical region may consist of similar time-varying profile, and in such scenario, it is difficult to achieve spectrum sharing between neighboring channels. In [JZhang], the time-varying traffic provisioning problem is solved with the objective of minimizing interference (blocking probability) between different classes of traffic. In [NSambo], the authors propose a procedure that avoids sharing of spectrum between neighboring channels to optimize blocking of connections.

In this invention, we design Iterative Simulated Annealing (ISA) procedure that provisions time-varying traffic demands with the goal of minimizing the maximum required spectrum for the given blocking probability of the best effort traffic. To the best of our knowledge, no solution is yet proposed to address this problem, and this is the first solution that efficiently solves the time-varying traffic provisioning problem.

### A3. How does the invention solve the problem described in A1?

We designed the ISA procedure that provisions time-varying traffic demands in the minimum amount of spectrum by sharing the maximum amount of spectrum among neighboring channels for the given blocking probability. In the first phase, the spectrum is provisioned for the *x* Gb/sof guaranteed traffic and *y* Gb/s of projected best effort bandwidth for the given traffic demands using the Simulated Annealing-based procedure. The procedure routes and assigns spectrum such that the *p* G/bs of pre-provisioned spectrum for the projected best effort traffic can be shared between neighboring channels. In the next phase, expansion and contraction of time-varying best effort traffic are dynamically executed for long enough time until the network reaches in a steady-state to determine blocking of best effort traffic. The procedure increases the amount of provisioned bandwidth and shared bandwidth for the best effort traffic, and repeats the same procedure until the potential pre-provisioned and shared bandwidths for the best effort traffic are considered. Finally, among the found solutions for the potential bandwidths of the best effort traffic, the procedure selects a solution that meets the blocking requirement of the network with the minimum amount of spectrum.

### B. What is the specific competitive/commercial value of the solution achieved by the present invention (e.g., less complexity, faster operation, lower cost, higher quality, etc.)?

(1) The ISA procedure provides an effective tool for planning and designing networks that supports time-varying traffic demands.
(2) The ISA procedure effectively provisions the given time-varying traffic demands within the minimum amount of spectrum for the given blocking probability of the best effort traffic.
(3) This ISA procedure is the first procedure that addresses the time-varying traffic provisioning problem with the goal of minimizing spectrum for the given blocking probability of traffic.

### D. DESCRIBE THE INVENTION

In this invention, we design Iterative Simulated Annealing (ISA) procedure in which bandwidth for the best effort traffic, denoted *as y* Gb/s , is pre-provisioned along with the bandwidth for guaranteed traffic in advance, and among this pre-provision bandwidth, *y* Gb/s , the procedure allows to share up to *p* Gb/s of bandwidth between neighboring channels. Thus, dynamic best effort traffic can vary from 0 up to *y* Gb/s on-the-fly. Since this *y* Gb/s bandwidth may not always be occupied by the best effort traffic, the spectrum provisioned for *y* Gb/s bandwidth can be shared among neighboring channels. The procedure allows (*p*/*y*)fraction of this spectrum to be shared among neighboring channels. In the subsequent phase, the procedure provisions the given set of traffic demands using the Simulated Annealing-based traffic provisioning procedure with the goal of maximizing sharing of spectrum between neighboring channels. Once the traffic is provisioned, the procedure dynamically expands and contracts the channels upon arrivals and departures of best effort traffic demands based on the given distributions. Upon arrivals of dynamic best effort traffic, the procedure starts occupying either provisioned or shared channel spectrum towards the lower frequencies first starting from the center channel frequency. If the spectrum at lower frequencies is already occupied, then the procedure starts occupying either provisioned or shared channel spectrum towards the higher frequency starting from the center channel frequency. If the spectrum of a channel at both lower and higher frequencies is already occupied, then the traffic is blocked. The procedure evaluates the network performance in such dynamic traffic scenario until the network reach in the steady state, and finally determines the blocking of best effort traffic. The ISA procedures iteratively repeats the same procedure after increasing the shared bandwidth *p* of best effort traffic by *v* Gb/s, where *v* Gb/sis the granularity at which transponder can expand and contract the channel bandwidth. Each iteration results in one potential solution.

If shared bandwidth *p* exceeds pre-provisioned bandwidth *y*, then procedure increases the amount of pre-provisioned bandwidth *y* by *v* Gb/s. The procedure is repeated until pre-provisioned bandwidth becomes equivalent to the transponder capacity *L* Gb/s . Finally, among the found potential solutions, the procedure selects a solution that results in a blocking lower than the given blocking limits β, and requires the minimum amount of spectrum.

Simulated Annealing is a probabilistic iterative method designed based on physical process of annealing a solid. Here, we modified this process to provision time-varying traffic in networks as follows. The configuration of the procedure is defined as an order of demands in which the time-varying connections are routed, wavelengths are assigned, and spectrum is allocated. The energy function to be minimized represents the maximum required spectrum over a fiber link. A temperature is defined as a global time-varying parameter *T*, and the annealing schedule controls how this temperature varies over time.

Initially, the Simulated-Annealing procedure determines the cost of each demand, which is defined as the product of the requested guaranteed bandwidth and the number of hops along the shortest route between source and destination nodes, *h_{sd}.* In the next step, the procedure sorts the given traffic demands in a descending order of their cost, and this sorted order of demands is considered as a new configuration *N*. A random order of demands is considered as a current configuration *C.* The energy function of the current configuration, *E*(*C*)*,* and the new configuration, *E*(*N*)*,* are initialized to infinite. The procedure also initializes temperature *T,* annealing parameter *α*. After initialization, the process applies the routing, wavelength assignment, and spectrum allocation procedure for time-varying traffic demands in the order of traffic demands defined in the new configuration N. The maximum required spectrum over the fiber represents the energy of the configuration *N,* E(*N*)*.* If the energy of the new configuration E(*N*) is reduced compared to the energy of the current configuration *E*(*C*), the procedure replaces the current *C* configuration by the new configuration *N*. On the other hand, if the energy is not improved, then the procedure replaces the current configuration with the new configuration with probability *e*^{*-*(*E*(*N*)*-E*(*C*)/T)}*.* In the next step, the procedure updates the temperature *T* by the annealing schedule that is *a*T.* Finally, the procedure checks the termination condition, whether the temperature is reduced beyond threshold or the maximum number of iterations has been reached. If either one of these conditions is met, the procedure is terminated, otherwise, the procedure generates a new configuration *N* from the current configuration *C* by swapping the order of two neighboring demands those are randomly selected, and repeats the same procedure.

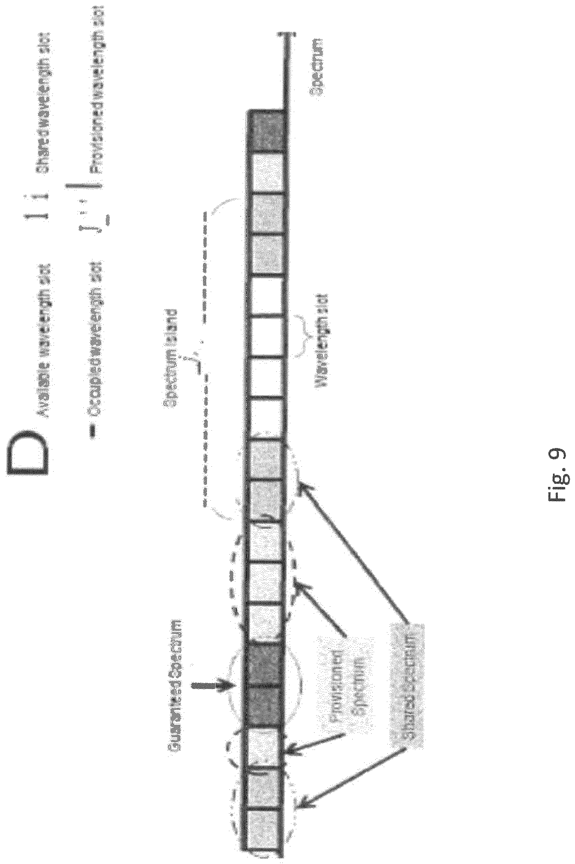

The procedure considers discretized spectrum for the routing, wavelength assignment, and spectrum allocation (RWSA) procedure. Each slot in spectrum is referred to as a wavelength slot. Each wavelength slot is ofg GHz . The spectrum is defined in terms of the number of consecutive wavelength slots. The center wavelength slot is referred to as the wavelength of a channel. The state of a wavelength slot can be occupied, available, shared, or provisioned. An occupied state represents that the wavelength slot is currently used to carry traffic. An available state represents that the wavelength slot is not assigned to any channel. A shared state represents that the wavelength slot is pre-provisioned and is shared by multiple channels. A provisioned state represents that the wavelength slot is reserved for a channel, but is not used to carry any traffic. The state of wavelength slots along a fiber/route is referred to as the spectrum profile of the fiber/route. A set of consecutive wavelength slots with states either available or shared is referred to as a spectral island as shown in Fig. 9. A set of wavelength slots reserved for guaranteed traffic is referred to as guaranteed spectrum, a set of wavelength slots reserved for best effort traffic and which is not shared is referred to as provisioned spectrum, and a set of wavelength slots shared among neighboring channels is referred to as the shared spectrum. How the provisioned spectrum is reserved around the guaranteed spectrum and how the shared spectrum reserved around the provisioned spectrum are demonstrated in Fig. 9. The Ceil(.) denotes a ceiling operation in mathematics.

For routing, wavelength assignment, and spectrum allocation of time-varying traffic demands, the procedure pre-calculates *K* - shortest routes between each pair of nodes. For a traffic demand, the procedure first selects one of the *K -* shortest routes, which is not yet considered. The procedure finds the spectrum profile along the selected routes as follows. If wavelength slot *w* is occupied on at least one of the link along the route, the state of wavelength slot *w* of the spectrum profile is occupied. If wavelength slot *w* is not occupied on all the links along the route, and the state of wavelength slot *w* is provisioned on at least one of the links along the route, the state of wavelength slot *w* of the spectrum profile is provisioned. If wavelength slot *w* is neither occupied nor provisioned on all the links along the route, and the state of wavelength slot *w* is shared on at least one of the links along the route, the state of wavelength slot *w* of the spectrum profile is shared. If wavelength slot *w* is available on all the links along the route, the state of wavelength slot *w* of the spectrum profile is available. After finding the spectrum profile of the selected route, the procedure finds a spectral island with the following requirements. A spectral island with at least [Ceil(*x*/*v*)*Ceil(*z*/*g*)] number consecutive wavelength slots with state available (called guaranteed spectrum), and [Ceil((*y-p*)/*v*)*Ceil(*z*/*g*)] number of wavelength slots with state available around the guaranteed spectrum (called provisioned spectrum), and [Ceil(*p*/*v*)*Ceil(*z*/*g*)] number of wavelength slots around provisioned spectrum with state either available or shared (called shared spectrum) at the edges of the spectral island are searched in the spectrum profile of the route. The guaranteed spectrum, shared spectrum, and provisioned spectrum are illustrated in Fig. 9. The procedure records the wavelength at which the spectrum island is available. The above mentioned procedure is repeated for all *K -* shortestroutes. Finally the procedure selects a route on which the spectrum island is available at the lowest wavelength, and updates the relevant states of wavelength slots on all links along the route as follows. On the selected route and in the spectrum island at the selected wavelength, the procedure reserves [Ceil(*x*/*v*)*Ceil(*z*/*g*)] number consecutive available wavelength slots for guaranteed traffic by updating the state of the wavelength slots to be occupied, [Ceil((*y*-*p*)/*v*)*Ceil(*z*/*g*)] number of available wavelength slots for best effort traffic around the guaranteed spectrum by updating the state of the wavelength slots to be provisioned, and number of shared or available wavelength slots around the provisioned spectrum for best effort traffic by updating the state of the wavelength slots to be shared.

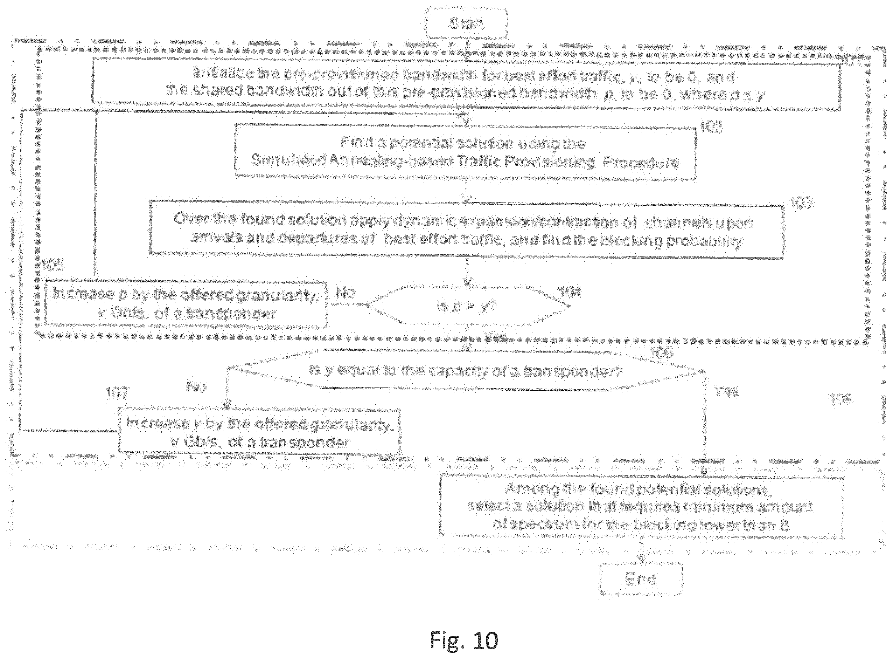

The flow chart of the ISA procedure is shown in Fig. 10, and the procedure in described in details as follows.
101: The procedure initializes the pre-provisioned bandwidth for best effort traffic, *y*, to be 0, and the shared bandwidth out of this pre-provisioned bandwidth, *p* , to be 0, where *p≤y.*
102: The procedure finds a potential solution using the Simulated Annealing-based Traffic Provisioning procedure.
103: Over the found solution, the procedure applies dynamic expansion/contraction of channels upon arrivals and departures of best effort traffic, and finds the blocking probability. Upon arrivals of dynamic best effort traffic, the procedure starts occupying either provisioned or shared channel spectrum towards the lower indexed wavelength slots first starting from the center channel frequency. If the lower indexed wavelength slots of a channel are already occupied, then the procedure starts occupying either provisioned or shared channel spectrum towards the higher indexed wavelength slots starting from the center channel frequency.
104: The procedure checks whether the shared bandwidth exceeds the pre-provision bandwidth for best effort traffic. If not, then the procedure executes Step 105, otherwise the procedure executes Step 106.
105: The procedure increases *p* by the offered granularity, *v* Gb/s, of a transponder.
106: The procedure checks whether *y* Gb/s is equal to the capacity of transponder *L* Gb/s. If not, then the procedure follows Step 107, otherwise the procedure follows Step 108.
107: The procedure increases *y* by the offered granularity, *v* Gb/s, of a transponder.
108: Among the found potential solutions, the procedure selects a solution that requires minimum amount of spectrum for the blocking lower than β.

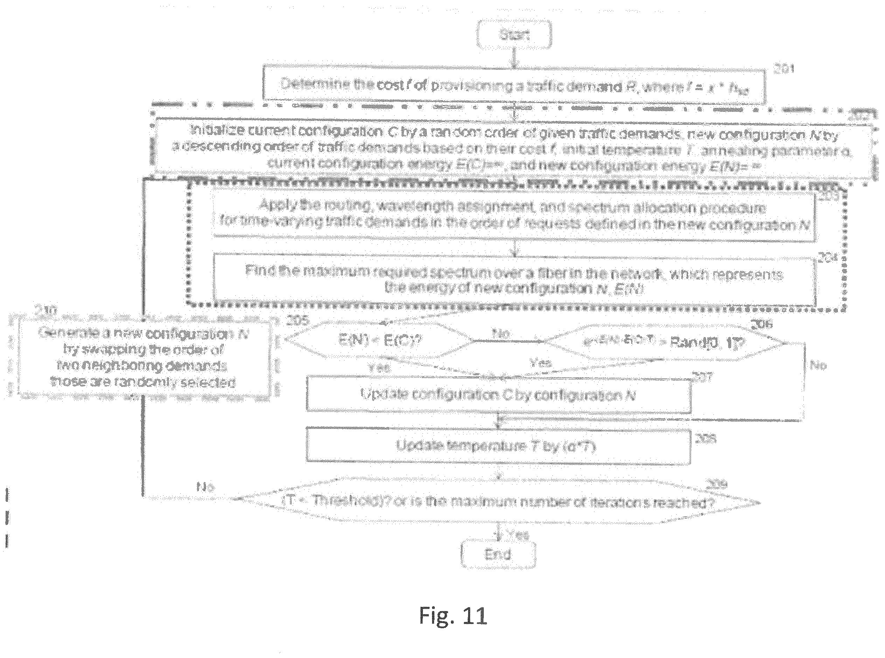

The flow chart of the Simulated Annealing-based traffic provisioning procedure is shown in Fig. 11, and the procedure in described in details as follows.
201: The procedure determines the cost *f* of provisioning a traffic demand *R*, where *f* = *x*h_{sd}.*
202: The procedure initializes current configuration *C* by a random order of given traffic demands, new configuration *N* by a descending order of traffic demands based on their cost *f*, initial temperature *T,* annealing parameter α, current configuration energy *E*(*C*) = ∞, and new configuration energy *E*(*N*) = ∞.
203: The procedure applies the routing, wavelength assignment, and spectrum allocation (RWSA) procedure for time-varying traffic demands in the order of requests defined in the new configuration *N*.
204: The procedure finds the maximum required spectrum over a fiber in the network, which represents the energy of new configuration *N, E*(*N*)*.*
205: The procedure checks whether the energy of the new configuration is smaller than the energy of the current configuration. If the energy of the new configuration is smaller, than the procedure follows Step 207, otherwise the procedure follows Step 206.
206: The procedure checks whether the probability e^{*-*(*E*(*N*)*-E*(*C*)/*T*)} is greater than a uniform random number between 0 and 1. If not, then the procedure follows Step 208, otherwise the procedure follows Step 207.
207: The procedure updates configuration *C* by configuration *N.*
208: The procedure updates temperature *T* by (*a*T*)*.*
209: The procedure checks weather the temperature *T* is smaller than the given threshold or the maximum number of iterations is reached. If any one of these conditions is met, then the procedure terminates, otherwise the procedure follows Step 210.
210: The procedure generates a new configuration *N* by swapping the order of two neighboring demands those are randomly selected.

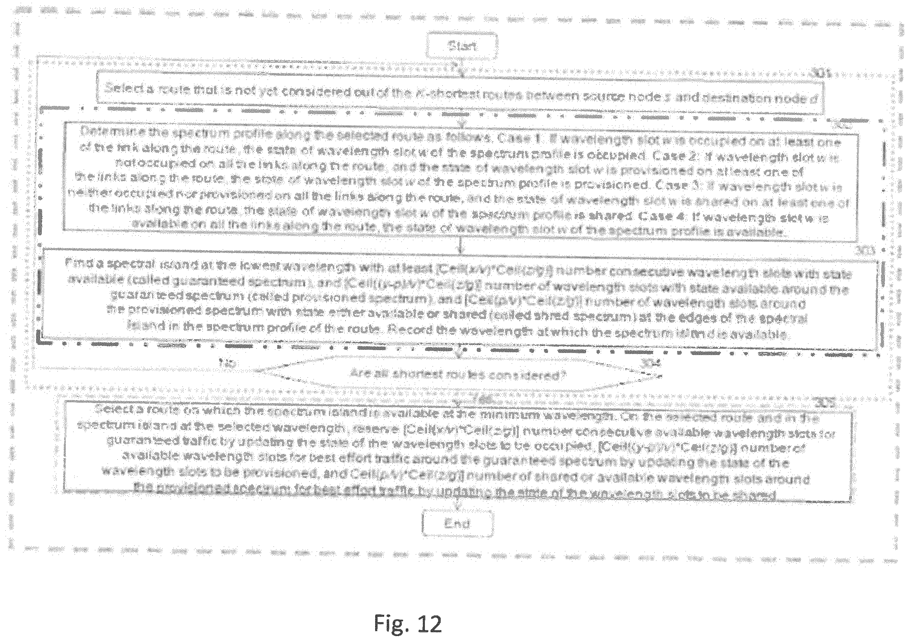

The flow chart of the routing, wavelength assignment, and spectrum allocation (RWSA) procedure is shown in Fig. 12, and the procedure in described in details as follows.
301: The procedure selects a route that is not yet considered out of the *K* - shortest routes between source node *s* and destination node *d*.
302: The procedure determines the spectrum profile along the selected route as follows.
   **Case 1:** If wavelength slot *w* is occupied on at least one of the link along the route, the state of wavelength slot *w* of the spectrum profile is occupied.
   **Case 2:** If wavelength slot *w* is not occupied on all the links along the route, and the state of wavelength slot *w* is provisioned on at least one of the links along the route, the state of wavelength slot *w* of the spectrum profile is provisioned.
   **Case 3:** If wavelength slot *w* is neither occupied nor provisioned on all the links along the route, and the state of wavelength slot *w* is shared on at least one of the links along the route, the state of wavelength slot *w* of the spectrum profile is shared.
   **Case 4:** If wavelength slot *w* is available on all the links along the route, the state of wavelength slot w of the spectrum profile is available.
303: The procedure finds a spectral island at the lowest wavelength with at least [Ceil(*x*/*v*)*Ceil(*z*/*g*)] number consecutive wavelength slots with state available (called guaranteed spectrum), and [Ceil((*y*-*p*)/*v*)*Ceil(*z*/*g*)] number of wavelength slots with state available around the guaranteed spectrum (called provisioned spectrum), and [Ceil(*p*/*v*)*Ceil(*z*/*g*)] number of wavelength slots around the provisioned spectrum with state either available or shared (called shared spectrum) at the edges of the spectral island in the spectrum profile of the route. The procedure records the wavelength at which the spectrum island is available.
304: The procedure checks whether all routes are considered. If all *K* -shortestroutes are taken into consideration, then the procedure follows Step 305, otherwise the procedure repeats Step 301.
305: The procedure selects a route on which the spectrum island is available at the minimum wavelength. On the selected route and in the spectrum island at the selected wavelength, the procedure reserves [Ceil(x/*v*)*Ceil(*z*/*g*)] number consecutive available wavelength slots for guaranteed traffic by updating the state of the wavelength slots to be occupied, [Ceil((*y*-*p*)/*v*)*Ceil(*z*/*g*)] number of available wavelength slots for best effort traffic around the guaranteed spectrum by updating the state of the wavelength slots to be provisioned, and Ceil(*p*/*v*)*Ceil(*z*/*g*)] number of shared or available wavelength slots around the provisioned spectrum for best effort traffic by updating the state of the wavelength slots to be shared.

Below are some related references for the background.
[NMcKeown] N. McKeown, T. Anderson, H. Balakrishnan et. al, "OpenFlow: Enabling Innovation in Campus Networks," Proc. of ACM SIGCOMM, vol. 38, issue. 2, pp. 69-74, Apr 2008
[APatel] A. N. Patel, P. N. Ji, and T. Wang, "QoS-Aware Optical Burst Switching in OpenFlow-based Software-Defined Optical Networks," Proc. of ONDM, pp. 274-279, Apr 2013
[PJi] P. Ji, "Software Defined Optical Networks, "Proc. of ICOCN, pp.31-34, Nov. 2012 [ITU-T] ITU-T G.694.1, "Spectral grids for WDM applications: DWDM frequency grid," May 2002
[APatel2] A. N. Patel et. al, "Routing, Wavelength Assignment, and Spectrum Allocation in Transparent Flexible Optical (FWDM) Networks," Proc. of Photonics in Switching, no. PDPWG1, 2010
[MJinno] M. Jinno et. al., "Spectrum-Efficient and Scalable Elastic Optical Path Network: Architecture, Benefits, and Enabling Technologies," IEEE Communication Magazine, vol. 47, no. 11, pp. 66-73, Nov 2009
[YKai] Y. Huang et. al, "Terabit/s Optical Superchannel with Flexible Modulation Format for Dynamic Distance/Route Transmission," Proc. of OFCNFOEC, no. OM3H.4, 2012
[TXia] T. Xia et. al, "High Capacity Field Trials of 40.5 Tb/s for LH Distance of 1,822 km and 54.2 Tb/s for Regional Distance of 634km," Proc, of OFCNFOEC, no. PDP5A.4, 2013
[KChrisl] K. Christodoulopoulos et. al, "Dynamic Bandwidth Allocation in Flexible OFDM-based Networks.," Proc. of OFCNFOEC, no. OTuI5, 2011
[KChris2] K. Christodoulopoulos et. al, "Time-Varying Spectrum Allocation Policies and Blocking Analysis in Flexible Optical Networks," IEEE Journal on Selected Areas in Communications ,vol. 31, no. 1, Jan 2013
[GShen] Gangxiang Shen et. al., "Maximizing Time-Dependent Spectrum Sharing between Neighboring Channels in CO_OFDM Optical Networks," Proc. of ICTON, no. Mo.B1.3,2011
[MKlinkowski] M. Klinkowski et. al., "Elastic Spectrum Allocation for Time-Varying Traffic in FlexGrid Optical Networks," IEEE Journal on Selected Areas in Communications ,vol. 31, no. 1, Jan 2013
[CXie] C. Xie et. al., "Spectrum Sharing for Time-varying Traffic in OpenFlow-based Flexi-Grid Optical Networks," Proc. of ACP, no. AF4A.52,2012
[JZhang] J. Zhang et. al., "Time-dependent Spectrum Resource Sharing in Flexible Bandwidth Optical Networks," Journal of IET Networks, vol. 1, no. 4, Dec 2012
[NSambo] N. Sambo et. al, "Routing and Spectrum Assignment for Super-channel in Flex-grid Optical Networks," Proc. of ECOC, no. Mo.1.D.4, 2012

## Claims

1. A method for provisioning time-varying traffic demands in an optical transport software-defined network, the method comprising:
pre-provisioning (201) an amount of bandwidth for best effort traffic;
**characterized by** the following steps:
iteratively applying, (202) using a processor, an iterative simulated annealing-based traffic provisioning procedure to determine candidate bandwidths for the best effort traffic in a set of iterations; and
selecting (208) a particular one of the candidate bandwidths for the best effort traffic that has a corresponding blocking value lower than a given blocking requirement β and that requires a minimum amount of spectrum as compared to other ones of the candidate bandwidths for the best effort traffic,
wherein said iteratively applying step includes:
varying the amount of bandwidth for best effort traffic in each of the iterations to determine the candidate bandwidths for the best effort traffic; and
varying an amount of shared bandwidth between neighboring channels, out of the amount of bandwidth for best effort traffic, in each of the iterations, to further determine the candidate bandwidths for the best effort traffic.

2. The method of claim 1, wherein the candidate bandwidths for the best effort traffic are found responsive to a routing, wavelength assignment, and spectrum allocation procedure applied for the iterative simulated annealing-based traffic provisioning procedure.

3. The method of claim 2, wherein the routing, wavelength assignment, and spectrum allocation procedure comprises:
finding spectrum over the *K*-shotest routes; and
selecting a given route from among the *K*-shortest routes on which is available the spectrum at a lowest wavelength with respect to other routes from among the *K*-shortest routes.

4. The method of claim 3, wherein the routing, wavelength assignment, and spectrum allocation procedure further comprises:
determining a spectrum profile of the given route; and
searching in the spectrum profile for a spectral island at the lowest available wavelength and having at least a predetermined minimum number of at least one of available wavelength slots and shared wavelength slots.

5. The method of claim 4, wherein the spectrum profile is determined from among a predetermined possible set of spectrum profile states comprising occupied, provisioned, shared, and available.

6. The method of claim 1, wherein said step of varying the amount of bandwidth for best effort traffic comprises using different amounts of bandwidth for the best effort traffic to evaluate different amounts of spectrum supporting best effort traffic with different blocking probabilities.

7. The method of claim 1, wherein said step of varying an amount of shared bandwidth comprises using different amounts of shared bandwidth between neighboring channels to evaluate different amounts of spectrum supporting best effort traffic with different blocking probabilities.

8. The method of claim 1, wherein the amount of bandwidth for the best effort traffic and the amount of shared bandwidth are increased in each of the iterations.

9. The method of claim 1, wherein the iterative simulated annealing-based traffic provisioning procedure further comprises:
defining a current traffic demand configuration as a random order of a plurality of time-varying traffic demands; and
defining a new traffic demand configuration as a descending order of the plurality of time-varying traffic demands to reduce a convergence time, the descending order being based on respective cost functions of the plurality of time-varying traffic demands.

10. The method of claim 9, wherein the new traffic demand configuration is defined by swapping an order of the two neighboring traffic demands selected at random from among the plurality of time-varying traffic demands.

11. The method of claim 9, wherein said iteratively applying step includes applying a routing, wavelength assignment, and spectrum allocation procedure to the plurality of time-varying traffic demands in the descending order.

12. The method of claim 9, further comprising replacing the current traffic demand configuration with the new traffic demand configuration, responsive to an amount of energy of the new traffic demand configuration being less than an amount of energy of the current traffic demand configuration.

13. The method of claim 9, wherein each of the plurality of time-varying traffic demands is defined as a respective product of a respective requested guaranteed bandwidth and a respective number of hops along a shortest route between a source node and a destination node in the network.

14. The method of claim 1, wherein said simulated annealing based traffic provisioning procedure is performed until the amount of bandwidth pre-provisioned for the best effort traffic is equal to a corresponding transponder capacity.

15. A computer program product comprising a computer readable storage medium having computer readable program code embodied therein for performing a method according to one of claims 1 to 14.

## Patentansprüche

1. Verfahren zum Bereitstellen von zeitvariablen Verkehrsanforderungen in einem von einer optischen software-definierten Transport-Netzwerk, wobei das Verfahren umfasst:
Vorbereitstellung (201) eines Bandbreitenbetrags für Best Effort Traffic; **gekennzeichnet durch** die folgenden Schritte:
iteratives Anwenden (202), unter Verwendung eines Prozessors, eines iterativ simulated-annealing-basierten Verkehrsbereitstellungsverfahrens, um Kandidatenbandbreiten für den Best Effort Traffic in einer Reihe von Iterationen zu bestimmen; und
Auswahl (208) einer bestimmten der Kandidatenbandbreiten für den Best Effort Traffic, die einen entsprechenden Sperrwert hat, der niedriger ist als eine gegebene Sperrerfordernis β und die ein Minimum an Spektrum im Vergleich zu anderen Bandbreiten der Kandidaten für den bestmöglichen Datenverkehr erfordert,
wobei der iterativ anzuwendende Schritt umfasst:
Variation der Bandbreite für den Best Effort Traffic in jeder der Iterationen, um die Kandidatenbandbreiten für den Best Effort Traffic zu bestimmen; und
Variieren einer Menge von gemeinsam genutzten Bandbreiten zwischen benachbarten Kanälen aus der Menge der Bandbreite für den Best Effort Traffic, in jeder der Iterationen, um die Kandidatenbandbreiten für den Best Effort Traffic weiter zu bestimmen.

2. Verfahren nach Anspruch 1, bei dem die Kandidatenbandbreiten für den Best Effort Traffic als Reaktion auf ein Routing, eine Wellenlängenzuweisung und ein Spektrumzuweisungsverfahren gefunden werden, das für das iterativ simulated-annealing-basierte Verkehrsbereitstellungsverfahren angewendet wird.

3. Verfahren nach Anspruch 2, wobei das Routing, die Wellenlängenzuweisung und das Spektrumzuweisungsverfahren umfasst:
das Auffinden des Spektrums über die K-kürzesten Routen; und
Auswahl einer bestimmten Route aus den K-kürzesten Routen, auf denen das Spektrum bei niedrigster Wellenlänge verfügbar ist, im Vergleich zu anderen Routen aus den K-kürzesten Routen.

4. Verfahren nach Anspruch 3, wobei das Routing, die Wellenlängenzuordnung und das Spektrumzuweisungsverfahren weiterhin umfasst:
Bestimmung eines Spektralprofils der gegebenen Route; und
Suchen im Spektralprofil nach einer Spektralinsel mit der niedrigsten verfügbaren Wellenlänge und mit mindestens einer vorbestimmten Mindestzahl von mindestens einem der verfügbaren Wellenlängenslots und gemeinsamen Wellenlängenslots.

5. Verfahren nach Anspruch 4, bei dem das Spektrumprofil aus einem vorgegebenen möglichen Satz von Spektrumprofilzuständen bestimmt wird, die besetzt, bereitgestellt, gemeinsam genutzt und verfügbar sind.

6. Verfahren nach Anspruch 1, wobei der Schritt des Variierens der Bandbreitenmenge für Best Effort Traffic die Verwendung unterschiedlicher Bandbreitenmengen für Best Effort Traffic umfasst, um verschiedene Spektrenmengen zu bewerten, die Best Effort Traffic mit unterschiedlichen Blockierungswahrscheinlichkeiten unterstützen.

7. Verfahren nach Anspruch 1, wobei der Schritt des Variierens einer Menge gemeinsamer Bandbreite die Verwendung unterschiedlicher Mengen gemeinsamer Bandbreite zwischen benachbarten Kanälen umfasst, um verschiedene Mengen an Spektrum auszuwerten, die den Best Effort Traffic mit unterschiedlichen Blockierungswahrscheinlichkeiten unterstützen.

8. Verfahren nach Anspruch 1, wobei die Menge der Bandbreite für den Best Effort Traffic und die Menge der gemeinsam genutzten Bandbreite in jeder der Iterationen erhöht werden.

9. Verfahren nach Anspruch 1, wobei das iterativ simulated-annealing-basierte Verkehrsbereitstellungsverfahren weiterhin umfasst:
Definieren einer aktuellen Verkehrsnachfragekonfiguration als zufällige Reihenfolge einer Vielzahl von zeitvariablen Verkehrsnachfragen; und
Definieren einer neuen Verkehrsnachfragekonfiguration als absteigende Reihenfolge der Pluralität von zeitvariablen Verkehrsanforderungen zur Reduzierung einer Konvergenzzeit, wobei die absteigende Reihenfolge basiert auf den jeweiligen Kostenfunktionen der Vielzahl zeitvariabler Verkehrsnachfragen.

10. Verfahren nach Anspruch 9, wobei die neue Verkehrsnachfragekonfiguration durch Austauschen einer Reihenfolge der beiden benachbarten Verkehrsnachfragen definiert wird, die nach dem Zufallsprinzip aus der Vielzahl zeitvariabler Verkehrsnachfragen ausgewählt werden.

11. Verfahren nach Anspruch 9, wobei der iterativ anzuwendende Schritt das Anwenden eines Routing-, Wellenlängenzuweisungs- und Spektrumzuweisungsverfahrens auf die Vielzahl von zeitvariablen Verkehrsanforderungen in absteigender Reihenfolge umfasst.

12. Das Verfahren nach Anspruch 9, das weiterhin das Ersetzen der aktuellen Verkehrsnachfragekonfiguration durch die neue Verkehrsnachfragekonfiguration umfasst, in Reaktion darauf, dass die Energiemenge der neuen Verkehrsnachfragekonfiguration kleiner ist als die Energiemenge der aktuellen Verkehrsnachfragekonfiguration.

13. Verfahren nach Anspruch 9, bei dem jede der mehreren zeitlich veränderlichen Verkehrsnachfragen definiert ist als das jeweilige Produkt aus einer jeweils geforderten garantierten Bandbreite und einer entsprechenden Anzahl von Hops auf dem kürzesten Weg zwischen einem Quellknoten und einem Zielknoten im Netzwerk.

14. Verfahren nach Anspruch 1, bei dem das iterativ simulated-annealing-basierte Verkehrsbereitstellungsverfahren durchgeführt wird, bis der Betrag der Bandbreite, der für Best Effort Traffic vorbereitgestellt wird, gleich einer entsprechenden Transponderkapazität ist.

15. Computerprogrammprodukt, das ein computerlesbares Speichermedium enthält mit darin enthaltenem, computerlesbarem Programmcode zur Durchführung eines Verfahrens nach einem der Ansprüche 2 bis 14.

## Revendications

1. Procédé de mise en service de demandes de trafic variable dans le temps dans un réseau de transport optique défini par logiciel, le procédé comprenant :
une pré-mise en service (201) d'une quantité de largeur de bande pour un trafic au mieux ;
**caractérisé par** les étapes suivantes :
l'application itérative (202), à l'aide d'un processeur, d'une procédure de mise en service de trafic sur la base d'un recuit simulé itératif pour déterminer des largeurs de bande candidates pour le trafic au mieux dans un ensemble d'itérations ; et
la sélection (208) de l'une particulière des largeurs de bande candidates pour le trafic au mieux qui a une valeur de blocage correspondante inférieure à une exigence de blocage donnée β et qui exige une quantité minimale de spectre en comparaison à d'autres des largeurs de bande candidates pour le trafic au mieux,
dans lequel ladite étape d'application itérative inclut :
la variation de la quantité de largeur de bande pour un trafic au mieux dans chacune des itérations pour déterminer les largeurs de bande candidates pour le trafic au mieux ; et
la variation d'une quantité de largeur de bande partagée entre des canaux voisins, prise parmi la quantité de largeur de bande pour un trafic au mieux, dans chacune des itérations, pour déterminer davantage les largeurs de bande candidates pour le trafic au mieux.

2. Procédé selon la revendication 1, dans lequel les largeurs de bande candidates pour le trafic au mieux sont trouvées en réponse à une procédure d'acheminement, d'attribution de longueur d'onde et d'allocation de spectre appliquée pour la procédure de mise en service de trafic sur la base d'un recuit simulé itératif.

3. Procédé selon la revendication 2, dans lequel la procédure d'acheminement, d'attribution de longueur d'onde et d'allocation de spectre comprend :
le fait de trouver un spectre dans les K plus courts chemins ; et
la sélection d'un chemin donné parmi les K plus courts chemins sur lesquels est disponible le spectre à une longueur d'onde la plus courte par rapport à d'autres chemins parmi les K plus courts chemins.

4. Procédé selon la revendication 3, dans lequel la procédure d'acheminement, d'attribution de longueur d'onde et d'allocation de spectre comprend en outre :
la détermination d'un profil de spectre du chemin donné ; et
la recherche dans le profil de spectre d'un îlot spectral à la longueur d'onde disponible la plus courte et ayant au moins un nombre minimal prédéterminé d'au moins un des intervalles de longueur d'onde disponibles et des intervalles de longueur d'onde partagés.

5. Procédé selon la revendication 4, dans lequel le profil de spectre est déterminé parmi un ensemble possible prédéterminé d'états de profil de spectre comprenant occupé, mis en service, partagé et disponible.

6. Procédé selon la revendication 1, dans lequel ladite étape de variation de la quantité de largeur de bande pour un trafic au mieux comprend l'utilisation de différentes quantités de largeur de bande pour le trafic au mieux pour évaluer différentes quantités de spectre prenant en charge un trafic au mieux avec différentes probabilités de blocage.

7. Procédé selon la revendication 1, dans lequel ladite étape de variation d'une quantité de largeur de bande partagée comprend l'utilisation de différentes quantités de largeur de bande partagée entre des canaux voisins pour évaluer différentes quantités de spectre prenant en charge un trafic au mieux avec différentes probabilités de blocage.

8. Procédé selon la revendication 1, dans lequel la quantité de largeur de bande pour le trafic au mieux et la quantité de largeur de bande partagée sont augmentées dans chacune des itérations.

9. Procédé selon la revendication 1, dans lequel la procédure de mise en service de trafic sur la base d'un recuit simulé itératif comprend en outre :
la définition d'une configuration de demande de trafic actuelle en tant qu'ordre aléatoire d'une pluralité de demandes de trafic variable dans le temps ; et
la définition d'une nouvelle configuration de demande de trafic en tant qu'ordre décroissant de la pluralité de demandes de trafic variable dans le temps pour réduire un temps de convergence, l'ordre décroissant étant basé sur des fonctions de coûts respectives de la pluralité de demandes de trafic variable dans le temps.

10. Procédé selon la revendication 9, dans lequel la nouvelle configuration de demande de trafic est définie par un échange d'un ordre des deux demandes de trafic voisines sélectionnées aléatoirement parmi la pluralité de demandes de trafic variable dans le temps.

11. Procédé selon la revendication 9, dans lequel ladite étape d'application itérative inclut l'application d'une procédure d'acheminement, d'attribution de longueur d'onde et d'allocation de spectre à la pluralité de demandes de trafic variable dans le temps dans l'ordre décroissant.

12. Procédé selon la revendication 9, comprenant en outre le remplacement de la configuration de demande de trafic actuelle par la nouvelle configuration de demande de trafic, en réponse au fait qu'une quantité d'énergie de la nouvelle configuration de demande de trafic est inférieure à une quantité d'énergie de la configuration de demande de trafic actuelle.

13. Procédé selon la revendication 9, dans lequel chacune de la pluralité de demandes de trafic variable dans le temps est définie en tant que produit respectif d'une largeur de bande garantie requise respective et d'un nombre respectif de bonds le long d'un chemin le plus court entre un noeud source et un noeud destination dans le réseau.

14. Procédé selon la revendication 1, dans lequel ladite procédure de mise en service de trafic sur la base d'un recuit simulé est effectuée jusqu'à ce que la quantité de largeur de bande pré-mise en service pour le trafic au mieux soit égale à une capacité correspondante de transpondeur.

15. Produit-programme d'ordinateur comprenant un support de stockage lisible par ordinateur dans lequel est stocké un code de programme lisible par ordinateur pour effectuer un procédé selon l'une quelconque des revendications 1 à 14.
